# EUROPEAN PATENT APPLICATION

(11) **EP 1 246 401 A1**
(43) Date of publication of application: **02.10.2002**
(21) Application number: 01202497.2
(22) Date of filing: 29.06.2001
(51) Int. Cl.: H04L 12/28, G08B 25/08

(54) **Electronic device for the interaction with domestic automation systems**

(30) Priority: 26.03.2001 IT MI010636
(71) Applicant: BTICINO S.p.A., 20154 Milano (IT)
(72) Inventor: Santini, Ernesto, 28060 Sozzaco-Novara (IT)
(74) Representative: Zanardo, Giovanni

(57) **Abstract**

Electronic device or portal (10) for the interaction with domestic automation systems (14), adapted to guarantee the connection and interface between the domotic system (14) installed in houses, and the user or installer (11); said device (10) allows interacting with the domotic system (14) by setting the parameters needed for defining necessary functions and translating such functions into commands to be imparted to each equipment of the domotic system, said electronic device (10) being adapted to transform the data detected by the equipment of the domotic system (14) into useful information for the client or the installer (11).

## Description

The present invention relates to an electronic device for the interaction with domestic automation systems.

At present, there exist domestic video surveillance and automation systems controlled through central management units installed at the users; in practice, by programming an electronic device located into the house, a user (or installer) can control the operation of all pieces of equipment connected to the device.

For example, a user can program a device for programming the lighting of a lamp in a specific moment.

The electronic device installed into the house can also be provided with the possibility of monitoring a series of sensors installed into the house, by actuating a sound alarm or a procedure of telephone calls to preselected numbers or to a control centre when one of the sensors detects an undesired presence.

Moreover, some systems allow the remote actuation or deactivation of the electronic management system, for example through a tone telephone.

However, traditional domestic video surveillance and automation systems such as those just mentioned exhibit several disadvantages.

In the first place, most of such systems use relatively simple user interfaces which, moreover, limit the possibility, for the user, of controlling the entire system.

For the purpose of using easy-to-manage interfaces, some systems include or are provided with a connection to an electronic processor (for example, to a personal computer); however, in this case, even though the domestic video surveillance and automation features are considerably improved, the high production and management costs of the processors limit their spreading and use.

Moreover, the continuous upgrades of application programs for managing control processors may even require a change of the electronic equipment installed in the house, with consequent increase of the total installation and operation costs.

Finally, the use of remote controls through telephone line can cause serious interferences with the normal use of the home telephone.

Within the scope of the above requirements, the purpose of the present invention, in particular, is that of indicating an electronic device for the interaction with "domotic" or domestic automation systems, and the operators and users of the same system.

Another purpose of the present invention is that of indicating an electronic device for the interaction with domestic automation systems, adapted to carry out a role of automation "motor" and guarantee, at the same time, the connection and interface between the system installed in the houses and the user, or installer.

Further purpose of the invention is that of indicating an electronic interaction device with domestic automation systems, which should allow transforming the data detected by the system equipment into useful information for the client or the installer.

Last but not least, another purpose of the present invention is that of realising an electronic device for the interaction with domestic automation systems, which should be relatively easy to install and use, as well as efficient, functional, cost-effective, safe and reliable.

These and other purposes, according to the present invention, are obtained by realising an electronic device for the interaction with domestic automation systems according to claim 1, to which reference shall be made for shortness.

Advantageously, the electronic device according to the invention is, to all effects, an Internet portal and thus, it allows the interaction with the main access systems to the Internet, such as personal computers (PCs), cellular phones with WAP technology, and access through GSM telephone line, through SMS messages.

Actually, it is an extremely peculiar portal since, in the specific case, the popular and informative aspects have secondary importance with respect to the aspects of interaction with the domestic automation system.

One of the fundamental roles of the electronic device object of the invention, from an operative point of view, consists in making the interaction of the end user and the involved market operator (for example, the installer) with the automation system transparent. Thus, it allows interacting with the domotic system by setting the required parameters for defining the necessary functions (for example, the starting of a piece of equipment of the system) and translating everything into the commands to the single domotic system.

If the portal transforms the data detected by the system equipment into useful information for the client or the installer (for example, the movement detected by an infrared sensor into the house is transformed into a warning, via SMS message, on a cellular phone, or email to the client or to a service company), authorised operators can access and create, for the first time, and change afterwards, the pages and access commands, the events generated in case of warning, the addresses or numbers to which emails or SMS messages must be sent.

Finally, there is provided the possibility of quickly and easily upgrading the configuration of the equipment connected to the domotic system.

Further features and advantages of an electronic device for the interaction with domestic automation systems, according to the present invention, will appear more clearly from the following, exemplificative and non-limiting description, made with reference to the attached figures. In such figures:

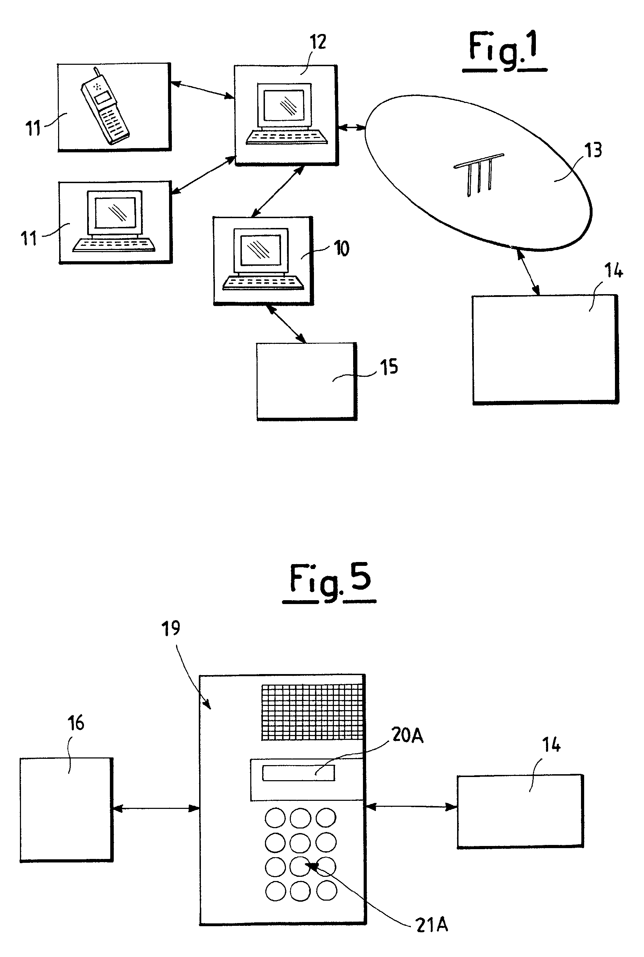

- Figure 1 shows a block diagram of a first embodiment of a connection structure between an electronic interaction device, according to the present invention, and domestic automatic - or domotic - systems;
- Figures 2A-2C show partial block diagrams of the connection structure of figure 1;
- Figures 3-7 show a series of partial block diagrams relating to the connections between the domotic system and various portions of the structure of figure 1;
- Figure 8 shows a block diagram of a further embodiment of the connection structure of figure 1;
- Figure 9 shows a block diagram of the equipment and features of an electronic device for the interaction with domestic automation systems, according to the present invention.

With reference to the mentioned figures, reference numeral 10 generically indicates an electronic interaction device, according to the present invention, reference numeral 11 indicates two user terminals, such as a cellular phone and a personal computer, reference numeral 12 indicates a service provider, whereas reference numeral 13 indicates an access provider, which provides to guarantee the availability and quality of the communication line, implements and manages the necessary protections ("firewalls") to ensure the safety of the entire system, and manages domestic communication systems connected to the domestic automation system, or domotic system 14.

The electronic interaction device 10, as already said, actually is an Internet portal, and the offer of such portal may be structured according to different modes.

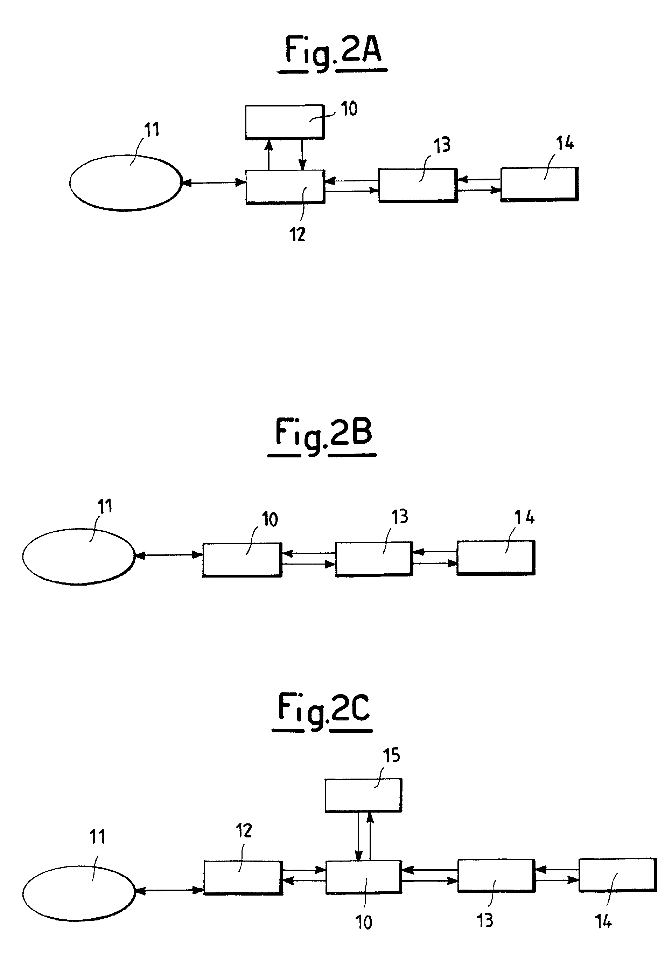

First of all, in indirect mode, the services implemented through device or portal 10 are part of a wider service package and the access to the same services is guaranteed through a link realised on the portal of service provider 12, which operates as an interface with user or client 11 (reference shall be made to figure 2A).

Thus, a link can be implemented on the site of the service provider 12 for domotic applications to portal 10.

In the case of direct mode, the service of the electronic device or portal 10 is regulated by a contract stipulated directly with the end client 11 (to this purpose, reference shall be made to the diagram of figure 2B). This type of solution can find application in the case of clients with domestic and/or tertiary automation systems 14 disseminated on the territory, such as shop chains or supermarkets.

In addition to this, it is possible to provide for the service of portal 10 to be part of an added-value offer, realised by third-party companies (block indicated with reference numeral 15), which use portal 10 for implementing their service, such as surveillance companies (VAS).

The connection of the domotic system 14 with the access provider 13 can occur through four different interface groups (home boxes) based on the required functionality of system 14 and on the type of line available for connection.

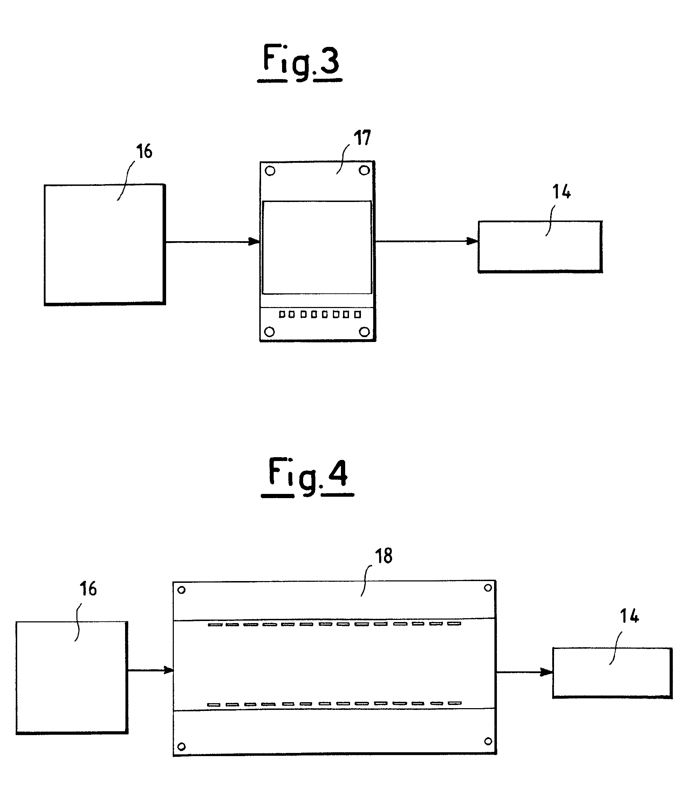

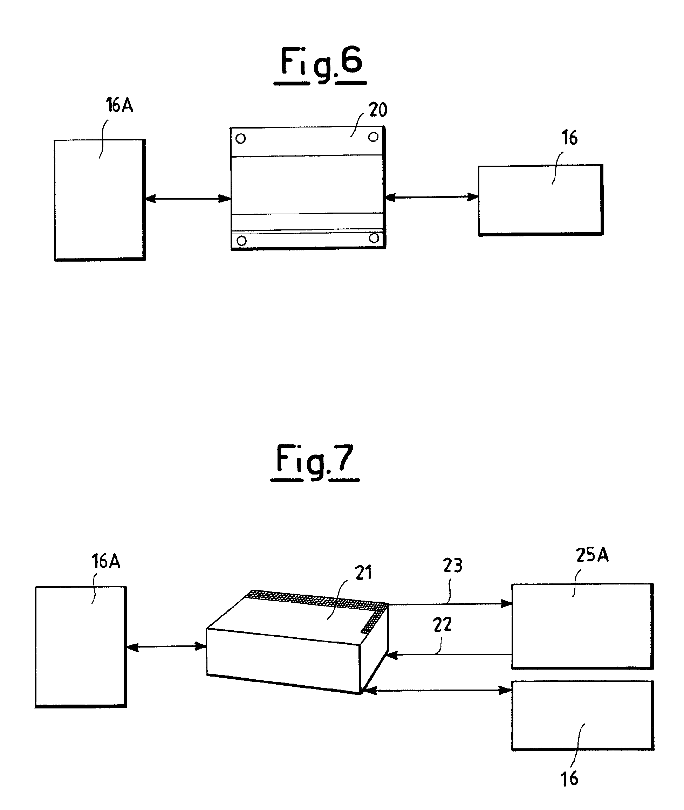

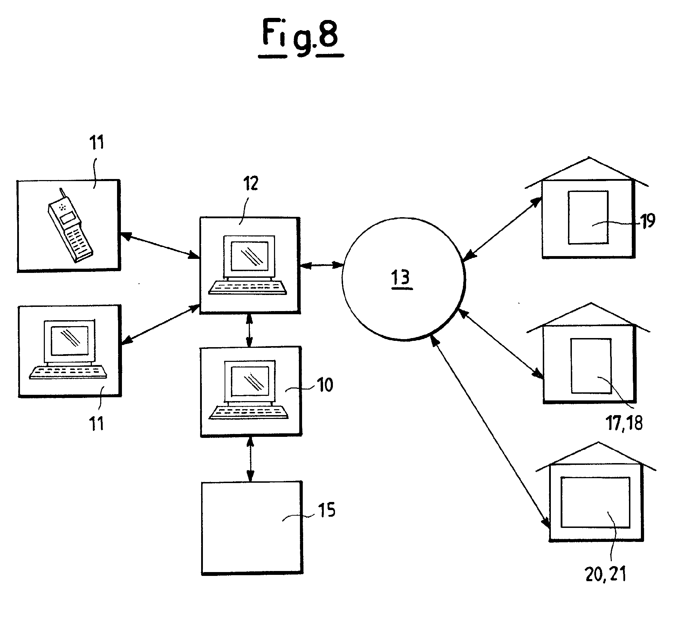

These access interfaces communicate with the telephone line, the latter indicated with block 16 in figures 3-5, through a protocol called "OPEN", and in particular they comprise a telephone actuator, indicated with reference numeral 17 in figure 3, or a PABX exchange (indicated with reference numeral 18 in figure 4), a PSTN telephone communicator, indicated with reference numeral 19 in figure 5, a GSM telephone communicator and an audio and/or video web server (such as those indicated with reference numerals 20 and 21 in figures 6 and 7).

The telephone actuator 17 or the PABX exchange 18 are connected to a PSTN telephone line 16 and they communicate with portal 10 through DTMF tones, with OPEN protocol.

Such devices 17, 18 can receive commands through the telephone line 16 and they are capable of returning the received command signal and transforming the received command into commands manageable by the domestic automation system or plant 14.

The PSTN telephone communicator 19 is connected to a PSTN telephone line 16 and communicates with portal 10 through DTMF tones with OPEN protocol; this device can receive commands through the telephone line, return the received command signal and transform the received command into commands manageable by the domestic automation system 14.

Moreover, communicator 19 is capable of sending messages following events of the domestic automation system 14, through signals coming from intrusion alarm sensors, technical alarms, tele-assistance, pressing of fixed buttons; the messages can be sent via voice or through DTMF tones with OPEN protocol.

In this way, the system is not only capable of detecting an intrusion and signalling it through sound horns, but it can also interface with, and actuate, the telephone communicator 19 to warn the interested personnel; for this purpose, configuration devices are used, that can be inserted into special housings obtained on the back of the equipment, so as to assign fixed zones to each sensor.

Moreover, it is possible to assign a progressive number used to detect the sensor in alarm and it is also possible to enable or not particular functions; in this way, to change the functions of the domotic system 14, for example to change the zone of a sensor or its functions, it is not necessary to intervene on the wiring but it is sufficient to replace the relevant configuration device.

As already mentioned, the system interfaces with devices that, besides detecting and signalling intrusion attempts, have external communication and actuate direct interventions.

For example, passive infrared detectors allow carrying out a volumetric control of the house generating intrusion alarms when the system is connected, whereas when the system is disconnected, they generate pre-alarms capable of piloting relay actuators that command external devices, such as supplementary bells or lights.

Moreover, it is possible to use a contact interface to connect a series of magnetic contacts, normally closed, arranged on doors and windows, to the antitheft system of the domotic system 14, so as to have a total control of the house perimeter; with disconnected system, it is possible to generate pre-alarms to pilot relay actuators, capable of commanding external devices such as lights or conditioning systems.

Finally, an optional auxiliary channel interface module can allow the connection of simple contacts, normally closed or open, whose change of status generates auxiliary alarms (antitheft, emergency, danger, technical alarms) or, as an alternative, the connection with a gas detector; both connection modes allow actuating sirens (with maximum or reduced sound) and/or telephone communicators, of the type indicated with reference numeral 19, or relay actuators, which communicate outwards.

The relay actuator is commanded by intrusion alarms and by auxiliary alarms, by actuating a relay capable of interfacing with the outside world and piloting devices, such as sirens, blinking lights, supplementary bells, solenoid valves or telephone combiners.

The telephone communicator 19 is capable of automatically dialling the telephone numbers previously set, to which an alarm message must be sent, and of forwarding the pre-recorded message or messages over the telephone line 16; it allows bidirectional communication between the user, the antitheft system and the electrical system since, in case of alarm detected by the antitheft system, it actuates to make the call to the numbers set and specifies the type of detected alarm, and it can be called by the user and, through preset codes it is capable of executing commands of devices installed in the house. All customisation steps are guided and displayed by display 20A, and confirmations and codes to be attributed to incoming or outgoing messages to communicator 19 occur through keyboard 21A.

Alternatively, or in addition to the PSTN telephone communicator 19, it is possible to provide for the presence of a GSM telephone communicator that communicates with portal 10, through a GSM connection, through DTMF tones with an OPEN protocol, or SMS messages.

This device can receive commands through the telephone line 16, return the received command signal and transform the received command into commands manageable by the domestic automation system 14.

Moreover, the GSM communicator is capable of sending messages following events of the domotic system 14 (intrusion alarm, technical alarms, tele-assistance, pressing of buttons); the messages can be sent via voice or through DTMF tones with OPEN protocol.

Moreover, among access interfaces, there are the web servers 20, 21, available in three versions (command and safety management, command, safety and video management, command, safety, video and audio management), based on the functional requirements of the domestic automation system 14 to which it is connected.

Web server 20, 21 can be connected to an Ethernet line 16A or to a telephone line 16, through an integrated modem; if connected to the Ethernet line 16A, it must have a fixed IP (Internet Protocol) address and communicates with portal 10 through an OPEN protocol encapsulated in the IP protocol or through HTML pages stored in the web server and configurable upon installation based on the type and required functions of the system.

If the OPEN protocol is used, the commands received through Ethernet 16A are transformed into SCS commands to the domestic automation system 14 and the confirmation of received command is returned to the sender; in case of events in the automation system 14 (alarms, pressing of buttons, etc.), an email, an OPEN command, an SMS message or a voice message is sent to an IP address or to a telephone number specified upon installation.

If HTML pages are stored in web server 20, 21, HTML pages can be retrieved through a browser, and the pressing of configured buttons generates the sending of commands and controls (signals indicated with reference numeral 23 in figure 7) to the domestic automation system 14; in case of events in the automation system 14, web server 20, 21 can send an email to an address set upon installation.

Images and sounds (signals indicated with reference numeral 22 in figure 7) coming from the telecameras and pushbutton panels of a video intercommunication system 25A, external to the domotic system 14, are transmitted to web server 21; in particular, the images are displayed into HTML pages or transmitted via FTP.

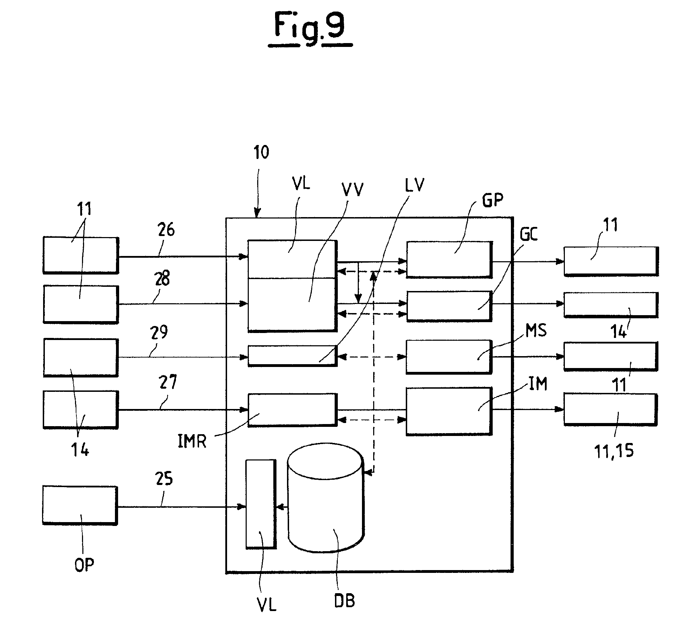

The operation of an electronic device or portal 10 for the interaction with domotic systems 14, according to the present invention, is substantially as follows (for this purpose, reference shall be made to figures 8 and 9).

During the initialisation or set-up procedure, each single piece of equipment of the domestic automation system 14 is associated to a physical configuration in the domotic environment and is characterised from the operating point of view.

Specifically, the type of operations that each piece of equipment must carry out and the optional hierarchical organisation within the domotic system 14 are defined. Moreover, this step allows a real customisation of system 14 and of each user interface 17, 18, 19, 20, 21, so as to make the interaction of operator OP completely familiar with system 14.

In this step, for example, the installer or operator OP can customise default pages or arrange the different pieces of equipment in the house plan so as to make the interaction with them totally intuitive (step 25 of insertion, update and configuration of the system of figure 9).

Portal 10 allows a simple and intuitive programming of the domotic scenarios, both by interacting on the single system and operating on the components of different systems; in order to implement this, portal 10 is provided with a database DB containing, besides the information relating to users, system configuration, event codes, images, settings, SMS messages, password and login, a library of pre-programmed scenarios, a series of guiding tools (wizards) for implementing new scenarios, capable of self-adapting to the real consistence of system 14 on which they will operate.

Moreover, operators OP can create customised libraries of scenarios. This allows the client to select the necessary scenarios in the specific situation from the library (for example, it is possible to actuate different scenarios in case the house is temporarily uninhabited or during holidays) and the installer to select several cases to minimise installation times.

Thus, portal 10 allows enabled operators to establish a connection with system 14 and send enabled commands in function of the connected operator; moreover, portal 10 keeps a log of the executed commands with the relevant indications of involved operators (log request and command sending step 26, log and password verification blocks VL, access code validity verification block VV, event log block LV and command generation block GC).

Moreover, such portal 10 allows defining the sequences of operations to be performed following an event recorded in the domotic environment 14 (event log block LV, image recording block IMR, image signal 27, image sending following request block IM), sending emails or SMS (MS block and SMS signal, indicated with reference numeral 28 in figure 9, for commands coming from user 11) to the owner of system 14 or to service companies 15, and keeping a record of the actions taken and of the result of the same.

Finally, the electronic device 10 further allows monitoring the situation detected by the domotic system 14; among the functions that can be realised through portal 10, it is possible to mention the following ones: tele-surveillance through internal television circuit, video intercommunication system call transfer, sound surveillance of the environment, weather monitoring, image recording (function of the IMR block on the input signal 27) collected following an alarm (alarm signals are schematically indicated with reference numeral 29 in figure 9).

Moreover, through portal 10 it is possible to provide software and routines installable on standard equipment such as personal computers (PCs), and handheld computers to allow the display of the status of system 14 and of the recorded evens (functions of blocks LV, GC, and GP of portal 10).

For example, through the IR port of a handheld computer it is possible to acquire messages received when not at home or acquiring the details of a recorded alarm.

Finally, portal 10 allows installer 11 or the assistance centres 15 to connect, following the owner's authorisation, to upgrade or change the programming of the devices included in the domotic system 14; in this case, all configurations relating to system 14 must be stored in the database DB.

Thus, the structure of portal 10 must be scalar in function of the number of active connections and portable on different servers (to this purpose, the connections that can be actuated into portal 10 are schematised in figure 9 with arrows and entire and broken lines, respectively according to whether the connection is of the direct or indirect type).

Finally, such structure must be modular to allow its installation on more severs in function of the network configuration.

The features of the electronic device for the interaction with domestic automation systems, object of the present invention, as well as its advantages, clearly appear from the above description.

Finally, it is clear that several variants can be made to the above electronic device without departing from the novelty principles of the inventive idea. It is also clear that in the practical implementation of the invention, materials, shapes and sizes of the illustrated details can be of any type according to the requirements, and the same can be replaced with other technically equivalent details.

## Claims

1. Electronic device (10) or portal for the interaction with domestic automation systems (14), of the type adapted to guarantee the connection and interface between said system (14) installed in houses, and the user or installer (11), **characterised in that** said device (10) allows interacting with the domotic system (14) by setting the parameters needed for defining necessary functions and translating such functions into commands to be imparted to each equipment of the automation system (14), said electronic device (10) being adapted to transform the data detected by the equipment of the domotic system (14) into useful information for the client or the installer (11).

2. Electronic device (10) according to claim 1, **characterised in that** it is connected to user terminals (11), to at least one service provider (12), at least one access provider (13), which provides to guarantee the availability and quality of the communication line, implements and manages the necessary protections to ensure the system safety and manages said domestic communication systems connected to the domestic automation system (14).

3. Electronic device (10) according to claim 1, **characterised in that** it is used by service companies (15) such as surveillance companies, to realise their service.

4. Electronic device (10) according to claim 2, **characterised in that** said access provider (13) is connected to said domestic automation system (14) through a series of interfaces (17, 18, 19, 20, 21) based on the required functionality of the system (14) and on the type of line available for connection, said access interfaces (17-21) being capable of communicating with the telephone line (16) through a predetermined protocol.

5. Electronic device (10) according to claim 4, **characterised in that** said interfaces (17-21) comprise at least one telephone actuator (17) and/or a PABX exchange (18) and/or a PSTN telephone communicator (19) and/or a GSM telephone communicator and/or an audio and/or video web server (20, 21).

6. Electronic device (10) according to claim 5, **characterised in that** said telephone actuator (17) or said PABX exchange (18) are connected to a PSTN telephone line (16) and communicate with said device (10) through DTMF tones, with OPEN protocol.

7. Electronic device (10) according to claim 5, **characterised in that** said PSTN telephone communicator (19) is connected to a PSTN telephone line and communicates with the electronic device (10) through DTMF tones with OPEN protocol, said communicator (19) being capable of sending messages following events of the domestic automation system (14), through signals coming from intrusion alarm sensors, technical alarms, tele-assistance, pressing of fixed buttons.

8. Electronic device (10) according to claim 7, **characterised in that** said telephone communicator (19) is capable of automatically dialling the telephone numbers previously set, to which an alarm message must be sent, and of forwarding at least one pre-recorded message over said telephone line (16).

9. Electronic device (10) according to claim 5, **characterised in that** said web servers (20, 21) allow managing video and/or audio safety and commands.

10. Electronic device (10) according to claim 1, **characterised in that** each single piece of equipment of the domestic automation system (14) is associated to a physical configuration in the environment, and is **characterised** from the operative point of view in a first initialisation step.

11. Electronic device (10) according to claim 10, **characterised in that** it comprises a database (DB) containing information relating to users, system configuration, event codes, images, settings, SMS messages, password and login, pre-programmed scenario libraries and a series of wizards for implementing new scenarios.

12. Electronic device (10) according to claim 11 **characterised in that** it keeps a memory of executed commands with the relevant indications of involved operators (26, VL, VV, LV, GC).

13. Electronic device (10) according to claim 12, **characterised in that** said device (10) allows sending SMS messages (28, MS), generating commands and HTML pages (GP, GC), sending recorded images (IMR) following a request (IM), checking access codes (VV) and key words (VL), monitoring the situation detected by said domestic automation system (14), having software installable on standard equipment, such as personal computers (PC) and handheld computers, to allow the display of the status of the system (14) and of recorded events (LV, GC, GP) and the upgrade or modification of the programming of the devices included in the domotic system (14).

14. Electronic device (10) according to claim 13, **characterised in that** the structure of said device (10) is modular to allow installation on more servers, in function of the network configuration.
